# EUROPEAN PATENT APPLICATION

(11) **EP 3 429 237 A1**
(43) Date of publication of application: **16.01.2019**
(21) Application number: 18179122.9
(22) Date of filing: 21.06.2018
(51) Int. Cl.: H04W 4/10, G10L 15/26, H04W 4/12, H04W 4/18, H04L 29/08

(54) **GROUP COMMUNICATION**

(30) Priority: 13.07.2017 FI 20175687
(71) Applicant: Airbus Defence and Space Oy, 00380 Helsinki (FI)
(72) Inventor: Pulkkinen, Jani, 00380 Helsinki (FI)
(74) Representative: Kolster Oy Ab

(57) **Abstract**

A solution in which speech items (8-1) of a group communication are converted (8-3) automatically to text items that are delivered (8-4) to group members and stored to a database with metadata is disclosed.

## Description

### FIELD

The invention relates to communication and especially to group communication.

### BACKGROUND

A Professional Mobile Radio (PMR) network is a mobile communication network for a special group of users, for example, for one or more enterprises or institutions. Typical examples of PMR networks are public safety type PMR networks used by public officials such as police, fire brigade and medical personnel. Communication in PMR networks are often group communication with short speech items. It may be that one or more of the group members are in a noisy environment or for some other reason distracted from listening to a call, and hence some important information may be missed.

### SUMMARY

The invention relates to methods, an apparatus, a computer program product and a system defined in the independent claims. Different embodiments are disclosed in the dependent claims.

An aspect of the invention provides a solution in which speech items in a group call are automatically converted to text items, that are delivered to the group and stored to a database with metadata.

### BRIEF DESCRIPTION OF THE DRAWINGS

In the following, embodiments will be described in greater detail with reference to accompanying drawings, in which
Figures 1A and 1B show simplified architecture of exemplary systems having schematic block diagrams of exemplary apparatuses;
Figures 2 to 7 are flow charts illustrating exemplified functionalities;
Figures 8 and 9 illustrates exemplified information exchange; and
Figures 10 and 11 are schematic block diagrams of apparatuses.

### DETAILED DESCRIPTION OF SOME EMBODIMENTS

The following embodiments illustrate different examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any network/system and its apparatuses configured to support voice and text-based group communication. One of such systems is known as Terrestrial Trunked Radio Access (TETRA) system. In the following different examples are described using TETRA network structure without restricting the examples and embodiments thereto. Other possible network solutions include TETRAPOL, DMR (digital mobile radio) systems, a PAMR network (Public Access Mobile Radio), and a 3^{rd}, 4^{th}, or 5^{th} or beyond, generation mobile network, like LTE (Long Term Evolution) and 3GPP MCPTT (3^{rd} Generation Partnership Project Mission Critical Push to Talk) based group voice services, Wi-MAX (Worldwide Interoperability for Microwave Access), GoTa (Global Open Trunking Architecture), and heterogeneous networks combining, for example, TETRA and WLAN (Wireless Local Area Network), like WiFi -based networks. It should be appreciated that the above list is not an exhaustive list.

The specifications of different systems, especially when wireless communication is utilized, develop rapidly. Such development may require extra changes to an embodiment. A current trend is to abstract the actual physical structure and to provide communication functionality in networks as software, as an on-demand service. For abstraction the future networks may utilize software defined networking (SDN) and/or network functions virtualization (NVF) architecture. The network functions virtualization architecture includes virtualized network functions (VNF). A virtualized network function is defined as a network function that runs in one or more virtual machines on top of a networking infrastructure that may include routers, switches, storage, servers, cloud computing systems, etc. These new network architectures may change the way networks are being constructed and managed. For example, one or more of the below described network node functionalities may be migrated to any corresponding abstraction or apparatus. Therefore, all words and expressions should be interpreted broadly and they are intended to illustrate, not to restrict, the embodiment.

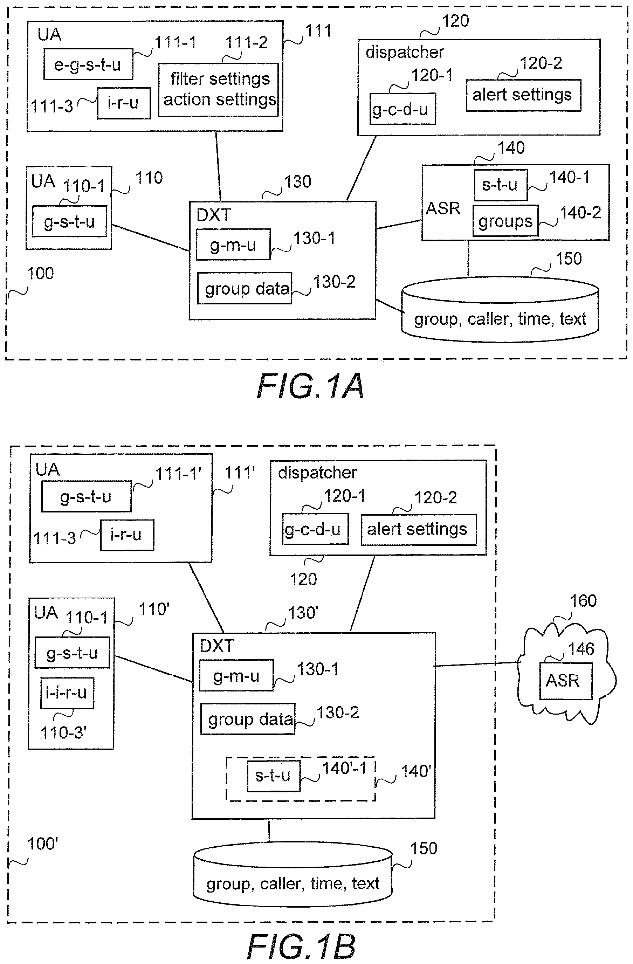

General architectures of communication systems according to embodiments implementing one or more speech-text-features, described in more detail below, and based on TETRA are illustrated in Figures 1A and 1B. Figures 1A and 1B are simplified system architectures only showing some network nodes and functional entities, all being logical units whose implementation may differ from what is shown. The connections shown in Figures 1A and 1B are logical connections; the actual physical connections may be different. It is apparent to a person skilled in the art that the systems also comprise other functions and structures used in or for group communication in TETRA. They are irrelevant to the actual invention. Therefore, they need not to be discussed in more detail here. As can be seen from Figures 1A and 1B, the network nodes, called also network elements, are easily mapped to other communication systems, and hence implementing the disclosed embodiments and examples to another kind of a network, such as an LTE based network providing group communication, is a straightforward solution for one skilled in the art.

In the example illustrated in Figure 1A, the TETRA system 100 comprises a plurality of user apparatuses (UA) 110, 111 (only two illustrated in Figure 1A), a plurality of dispatcher workstations 120 (only one illustrated in Figure 1A), a plurality of digital exchanges (DXT) 130 (only one illustrated in Figure 1A), one or more automatic speech recognition devices (ASR) 140 and a database server 150.

The TETRA user apparatuses 110, 111 represent herein any apparatus/equipment/terminal that is a computing device providing secure voice and/or data communications for users at least according to TETRA specification. The TETRA user apparatus 130 may be a mobile radio apparatus, such as a handheld radio apparatus, or a so called fixed radio apparatus in a vehicle, for example. Examples of handheld radio apparatuses include a handheld radio terminal, a smart-phone, a personal digital assistant (PDA), a handset, a laptop, a touch screen computer, a tablet, a notebook and a multimedia device. In the illustrated example of Figure 1A one of the two depicted TETRA users apparatuses is a so-called legacy user apparatus 110, and the other one is a nonlegacy user apparatus 111. The legacy user apparatus 110 means herein a user apparatus that is more limited in capabilities compared to the nonlegacy user apparatus. For example, the legacy user apparatus may be a TETRA only user apparatus and the nonlegacy user apparatus a smartphone configured to support TETRA. The legacy TETRA user apparatus 110 is configured to support the speech-text-feature and comprises for that purpose a group-speech-text unit (g-s-t-u) 110-1, whose functionality will be described in more detail below. The nonlegacy TETRA user apparatus 111 is configured to support a more sophisticated speech-text-feature and comprises for that purpose an enhanced group-speech-text unit (e-g-s-t-u) 111-1 and in a memory 111-2 different settings. In the illustrated example the settings are filter settings and action settings. The filter settings define when and/or what text items should be discarded (ignored). The action settings define what in a text item will trigger an action and what the triggered action will be. The filter settings may be group-specific or terminal-specific or user-specific, or any combination thereof. The action settings may be group-specific or terminal-specific or user-specific, or any combination thereof. Further, in the illustrated example the nonlegacy TETRA user apparatus 111 is configured to support an instant replay feature. For that purpose the nonlegacy TETRA user apparatus 111 comprises an instant-replay unit (i-r-u) 111-3. Examples of its functionality are described below.

The dispatcher workstation 120 is a specific kind of a user apparatus, and hence it is not called a user apparatus herein for the sake of clarity. The dispatcher workstation 120 can communicate with the user apparatuses 110, 111, and/or manage system, subscriber, group and/or organisation-specific parameters of the radio system. Generally, the dispatcher workstation is the central point in the voice communication. It should be appreciated that the dispatcher workstation may comprise several displays, communication consoles and/or computers and/or workstations or corresponding computing apparatuses. The dispatcher workstation 120 is configured to support the speech-text-feature and comprises for that purpose a group-call-display unit (g-c-d-u) 120-1 and in a memory alert settings 120-2. The alert settings may be group-specific or common to all groups. The alert settings may define keywords, which trigger alerts comprising one or more actions to be performed. Examples of alert settings and alerts are described in more detail below.

A digital exchange DXT 130 illustrates a network node in a switching and management infrastructure (SwMI). SwMI is equipment for a voice plus data (V+D) network, which enables the user apparatuses to communicate with each other and with the dispatcher workstation. In the illustrated example it is assumed that the digital exchange is configured to provide functionalities of a group server, and a press-to-transmit, or push-to-talk (PTT) server. The PTT server functionality takes cares of floor requests and delivery of received speech items. The group server functionality takes care of group management and delivery of text items to group members. For that purpose the digital exchange comprises a group-management unit (g-m-u) 130-1 configured to maintain group member information and depending on an implementation, it may also add other information to group data maintained in a memory 130-2, as will be described in more detail below.

The ASR device 140 is a computing device (apparatus, server) that can process (convert) a speech input to a corresponding text. Such computing devices (apparatuses, servers) include, but are not limited to, the following types: personal computer, a workstation, a distributed computing system, a cloud computing device, a computer cluster, an embedded system, a networking device, a mobile device, or a combination of any two or more of these devices. The ASR may use any of several known ASR methods, as well as any future method for the converting. The used ASR method bears no significance to the invention, and therefore there is no need to describe how the speech is converted to text in more detail herein. The ASR device comprises for the group communication related speech-text feature a speech-to-text unit (s-t-u) 140-1, which is configured to store text items with metadata to a database in the database server 150, and to send the text item to other group members. In the illustrated example of Figure 1A it is further assumed that the ASR device may appear as a dispatcher workstation to the system, or it may be a participating unit, and in both cases the ASR device 140 may listen all groups without explicitly joining the groups or being joined to the groups. To convert all speech items of all groups requires a lot of processing capacity, and most importantly, it is not necessary for all groups. Therefore, in the illustrated example the ASR device 140 has been configured to follow certain groups and ignore others, by storing to memory 140-2 information on groups, like group identifiers, that the ASR device 140 is configured to follow, i.e. is supposed to follow. For example, the dispatcher may add and delete groups to be followed, a group creator may add, and then later delete, the group in question to be a group to be followed. A further example is that those groups having at least one user apparatus/dispatcher workstation registered to receive the service, i.e. text items converted from speech items, are added to be groups to be followed, as long as there is at least one subscriber.

The database server 150 refers herein to a combination of a data storage (database) and a data management system. The data storage may be any kind of conventional or future data repository, including distributed and centralized storing of data, a cloud-based storage in a cloud environment, managed by any suitable management system. The data storage provides a searchable archive of the text items with metadata. The implementation of the data storage, the manner how data is stored, retrieved and updated are irrelevant to the invention, and therefore not described in detail here.

Figure 1B illustrates another example of a possible system 100'. The system of Figure 1B differs from the system of Figure 1A that in Figure 1B the ASR device, or more precisely the part that performs the speech-to-text conversion, locates in a public network, whereas the system of Figure 1A has a stand-alone ASR device. The advantage having a stand-alone ASR ensures that confidential information is not exposed since it remains within the network. However, such confidentiality is not always needed.

In the illustrated example of Figure 1B, the dispatcher workstation 130, and the database 150 correspond to those depicted in Figure 1A. The legacy TETRA user apparatus 110' differs from the one in Figure 1A that it is configured to support the instant replay, or more precisely a limited instant replay, and comprises for that purpose a limited instant-replay unit (l-i-r-u) 110-3'. The difference between the instant replay and the limited instant replay is that the limited instant replay only locally stored speech or text items can be replayed, whereas in the "non-limited" instant replay the speech or text item to be replayed may be obtained from a server storing them. Hence, below different functionalities described to be performed by the instant-replay unit are implementable with the limited instant-replay unit when the above described difference is taken into account. Further, in the example of Figure 1B, the nonlegacy TETRA user apparatus 111' differs from the one in Figure 1A that it is configured to support the speech-text feature in the same way as the legacy TETRA user apparatus, and comprises therefore the group-speech-text unit (g-s-t-u) 111-1'. In the example of Figure 1B the digital exchange 130' is further configured to comprise the speech-to-text server 140' which at the simplest is the speech-to-text unit 140'-1. The speech-to-text unit 140'-1 is further configured to forward the speech item to the ASR device 146 that locates in a public network 160 for the actual conversion. Further, in the illustrated example of Figure 1B, the group-management unit 130-1 is configured to add the speech-to-text server, or the speech-to-text unit, to be a group member in the group data in those groups whose speech items are to be converted. In another implementation, the group-manager unit may configured to add the speech-to-text server to all groups created as a group member, in which case the speech-to-text server preferably comprises the group information on those groups that it is supposed to follow.

Although the units are represented as separate units in Figures 1A and 1B, they, or two of them, may be integrated into one unit. Further, it should be appreciated that any illustrated user apparatus may be used with both systems, as well as implementations in which a server/device comprising the speech-to-text unit is specifically added to be a group member as implementations in which the server/device appears as a dispatcher or participating unit, and whether or not group information on groups to follow, or on groups not to follow (indicating thereby "follow other groups") is associated with the speech-to-text unit.

In a still further example, implementable to both systems, i.e. to the system of Figure 1A having internal unit performing the actual speech-to-text conversion, and to the system of Figure 1B having an external unit performing the actual speech-to-text conversion, the server/device comprising the speech-to-text unit comprises an interface to communicate directly with dispatcher workstations and user apparatuses, and at least one of the dispatcher workstations and/or at least one of the nonlegacy user apparatuses comprises a corresponding interface to communicate directly with the serve/device.

In the examples below it is assumed that PTT is used for delivering speech items and group Short Data Service (SDS) messages for delivering text items without limiting the disclosed examples to such a solution. For example, Mission-critical push-to-talk (MCPTT) functionality with short message service may be used. Another example includes in-band floor control messaging. Any short data instant delivery with a short delay, such as rich messaging and instant messaging, may be used. For example, instead of group SDS messages, individual SDS messages or packet data may be used. An advantage provided by the group SDS message is that the same end-to-end encryption with the same key that is used with the speech items may be used also for the text items. However, it should be appreciated that in the solution of Figure 1B, if the information is sent to the external server performing the actual conversion from speech to text, using the same end-to-end encryption is possible only within the network that does not comprise the external server. In such a case the speech-to-text unit may be configured to decrypt the speech item, send it either as such or encrypt it using another key so that the external server may decrypt the speech item. The external server may in turn be configured to send the text item without encrypting it, or encrypting it so the speech-to-text unit may decrypt the text item, and encrypt it using the end-to-end encryption key.

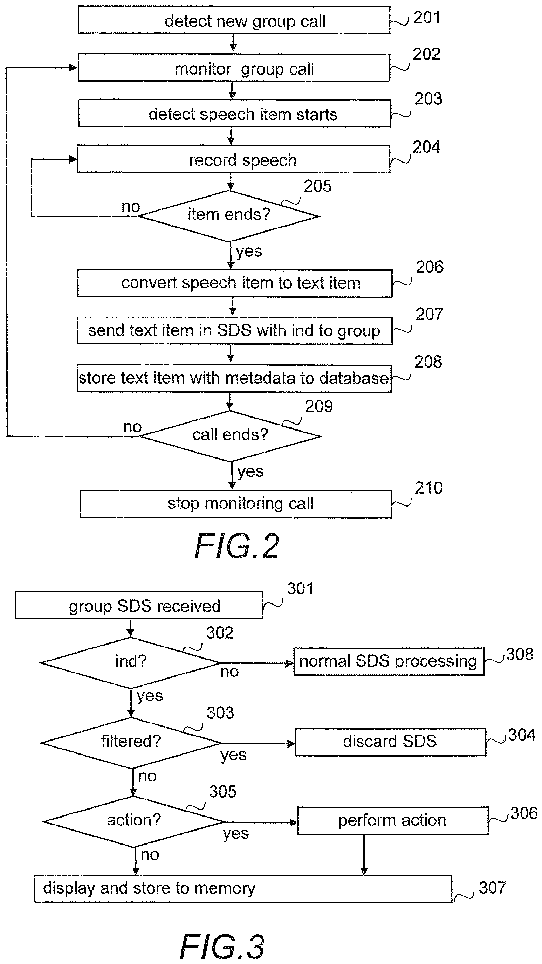

Figure 2 illustrates an example of a functionality of the group-speech-text unit, either in the ASR or in the DXT. It should be appreciated that no functionality relating to possible encrypting and decrypting is illustrated.

Referring to Figure 2, when the unit detects, in step 201 a new group call in a group it is supposed to follow, it starts in step 202 to monitor the group call. When it detects in step 203 that a new speech item starts, it records in step 204 the speech until the speech item ends (step 205: yes). When the speech item has ended, converting the speech item to a text item is caused in step 206. If the ASR is external to the system, in step 206 the recorded speech item is sent to the ASR, and a corresponding text item is received from the ASR. Then the text item is send in step 207 in a group SDS message to other members of group. The group SDS message differs from prior art group SDS message in that respect that it contains an indication (ind) that it contains a text item that is a converted speech item. The indication may be a protocol identifier or a specific value in a message type identification element on in a user defined data information element in the header of the SDS message, for example. A new value to Table 439, Protocol identifier information element contents, in ETSI standard EN 300 392-2 V2.3.2 (2001-03) European Standard (Telecommunications series), Terrestrial Trunked Radio (TETRA); Voice plus Data (V+D);Part 2: Air Interface (AI), may be added for this purpose, i.e. to indicate that the text message contains converted speech item. Further, the text item is stored in step 208 with its metadata to the database. Naturally, the metadata may be included to the SDS message. The metadata contains at least one of the following metadata items: information on the caller, i.e. who spoke, time information, and group information, item obtained using at least one of the previous information. Information on the caller may be caller identifier. The time information may be a time stamp indicating when the speech item started. The time information may further indicate the duration of the speech item. By having the speech in the text format, with the additional metadata, the data is in a format that is easily searchable by different queries in a database, and comprises a full transcription of the vocal message. Further examples of metadata items that facilitate associating the text to voice include a hash, calculated from the speech item, or based on the speech item, including related information, or any other corresponding digital fingerprint. For example, the hash may be calculated based on the group identifier, speaker identifier, start time and end time of the speech item. Still a further example includes adding two or more hashes to the metadata, one including the hash calculated as described above, and the other one for example calculated based on the speaker identifier and a date of the speech item. It should be appreciated that the above are only examples and the metadata is not limited to the examples.

In the meantime, if the call has not ended (step 209: no), monitoring the group call to detect next speech items, and processing speech items are continued until the call ends (step 209: yes). When the call ends, its monitoring is naturally ended in step 210. Monitoring the group call until it ends ensures that even long gaps between two speech items will not break the chain and the speech items will be stored to the database so that it is associated with the specific group call.

Although not illustrated in Figure 2, also the recorded speech item may be stored to the database. The recorded speech item may be stored with the same metadata, i.e. to have the same identification information. That facilitates mapping the speech and text to each other afterwords.

Figure 3 illustrates an example of a functionality of an user apparatus, or more precisely a functionality of the enhanced group-speech-text unit relating to group SDS messages targeted to a group in which the user apparatus is a member.

Referring to Figure 3, when a group SDS message is received in step 301, it is checked in step 302, whether or not the group SDS message contains the indication (ind) that it's content is a text item that is converted from a speech item. If the SDS message contains the indication (step 302: yes) that it contains a text item that is a converted speech item, it is determined in step 303, using the filtering settings, whether the SDS message should be filtered. The filtering is performed according to the filtering settings. Examples of filtering settings include "approve only if the group the SDS message relates to is a scanned group", "approve if the group is for a group whose call is pre-empted by a higher priority call", "approve if the user apparatus is in silent mode" and "approve if the related group call is an emergency call". There are no limitations to the filtering settings. If the SDS message is to be filtered (step 303: yes), the SDS message is discarded in step 304.

If the SDS message is not to be filtered (step 303: no), it is determined in step 305, whether or not an action is to be performed. For example, the action settings may include "if text contains expression xyz, alert by vibrating", "highlight words abc", "if text contains address, display map with current location and the location of the address". The actions may be defined freely. If it is determined that an action is to be performed (step 305: yes), the action is performed in step 306, and then the text item in the SDS message, possible with metadata, is both displayed and stored in step 307. Displaying the message automatically, without any additional user input, makes reading of the message much more easier, especially in a hectic situation. Storing the messages helps to check something afterwards. However, it should be appreciated that in another example the messages are not stored.

If no action is to be performed (step 305: no), the process proceeds directly to step 307 to display at least the content (text item) and store the message.

If the SDS message does not contain the indication (step 302: no), it is not a message having a text item that is a converted speech item, and the SDS message undergoes in step 308 a normal SDS message processing.

Other implementations of user apparatuses, or more precisely group-speech-text units, are also possible. In an implementation, when an SDS message with the indication is received, no filtering and no actions are performed, i.e. steps 303 to 306 are skipped over. Another implementation includes skipping over the filtering (i.e. steps 304 and 304) of the process illustrated in Figure 3. Still a further implementation includes that there are no actions defined, i.e. step 305 and 306 of the process illustrated in Figure 3 are skipped over.

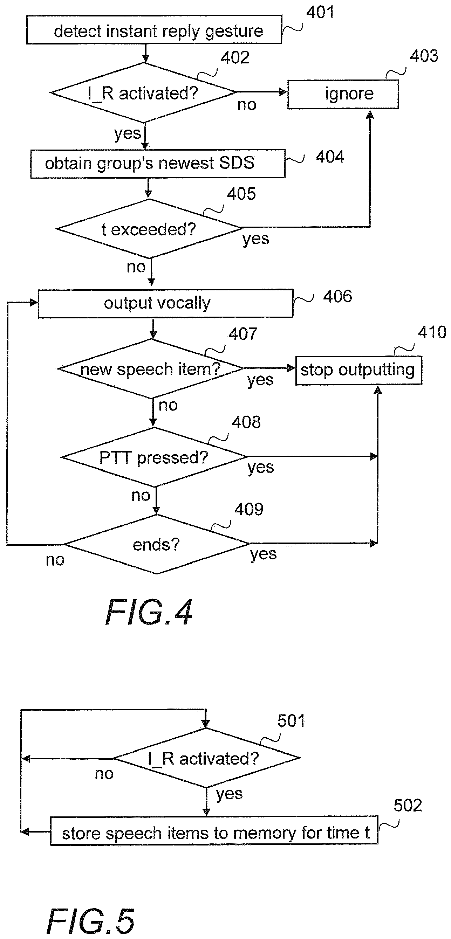

Figures 4 to 6 illustrate different examples of a functionality of an user apparatus, or more precisely functionalities of the instant-replay unit. In the examples it is assumed that the user apparatus contains a speech synthesizer, or corresponding a text-to-speech system as a part of the instant-replay unit. Any known or future speech synthesizers may be used. Further, one or more instant replay gestures may have been defined. An instant replay gesture may be for example a single tapping or a certain number of tapping the user apparatus by a finger or by a palm. For example, the user may see that the text message is displayed, but wants to hear the content instead of reading it, and taps the user interface thereby causing vocal output of the content. In addition to, or alternatively for predefined one or more gestures, the user may provide settings to indicate what constitutes a gesture for instant replay.

Referring to Figure 4, when a user input corresponding to an instant replay (I_R) gesture is detected in step 401, it is checked in step 402 whether or not the instant replay feature is activated. If not (step 402: no), the inputted gesture is ignored in step 403, at least for the instant replay, if the same gesture is use also for other features.

If the instant replay feature has been activated (step 402: yes), the newest SDS message in the active group is obtained in step 404 from the memory, and it is checked in step 405 whether the SDS message is fresh enough by checking whether a time limit t has been exceeded. For example, current time may be compared with the timestamp in the SDS message to find out whether the time limit has been exceeded. The time limit t may be 10 s, for example.

If the SDS message is not fresh enough (step 405:yes), the instant replay gesture is ignored (step 403). Hence no outdated information is repeated.

If the SDS message is fresh enough (step 405: no), its text item is outputted in step 406 vocally, using the synthetizator, until the text item ends (step 409: yes) which naturally stops the outputting. If during the outputting a new speech item is detected (step 407: yes), i.e. someone in the group has started to talk, in the example the outputting of the replayed text item is stopped in step 410 so that the user can listen to the new speech item. The outputting of the replayed text item is also stopped (step 410) if it is detected that a push-to-talk (PTT) button is pressed, or a corresponding icon is selected (step 408: yes).

In another embodiment the newest SDS message is outputted regardless of how old it is, i.e. step 405 is skipped over.

Instead of using the text items, the user apparatus may be configured to store the speech items directly and use them.

Figure 5 illustrates an embodiment in which the user apparatus, or more precisely the instant-replay unit, is configured to store the speech items for the instant replay for a certain time period.

Referring to Figure 5, when the instant replay (I_R) is activated (step 501: yes), speech items are stored in step 502 to the memory for a time period t, and then the speech item is removed. Naturally a new speech item may be stored over the previous speech item. The time period t may be the same as the time limit t described above.

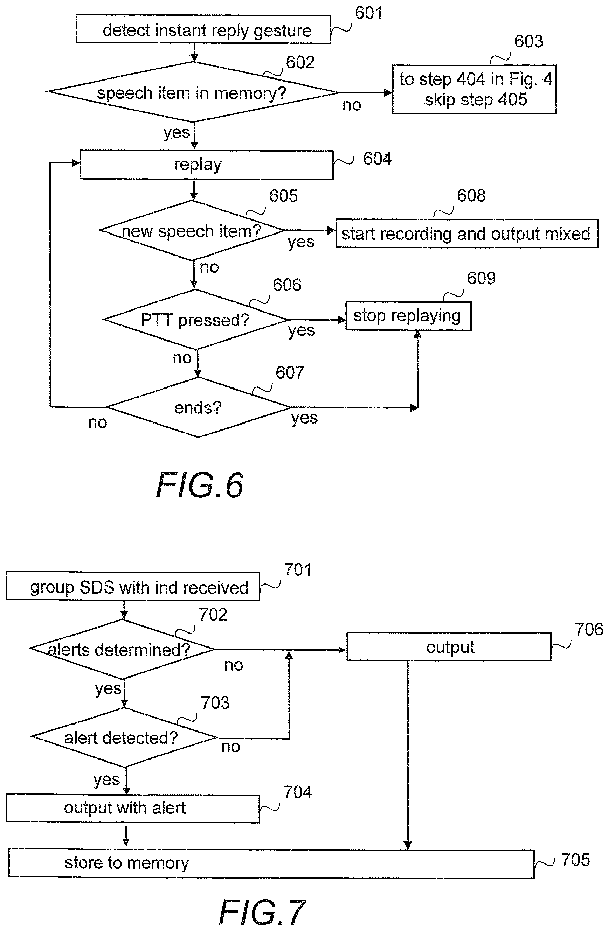

Figure 6 illustrates still another example of how a user apparatus, or more precisely, the instant-replay unit, may be configured to implement the instant replay. In Figure 6 it is assumed the instant replay is active, and the process described in Figure 5 is used for speech items.

Referring to Figure 6, when an instant replay gesture is detected in step 601, it is checked in step 602 whether or not there is a speech item in a memory. If not (step 602: no), the process proceeds (step 603) to step 404 in Figure 4 to take the newest SDS message and in this embodiment it is not checked whether or not the time limit has exceeded. In other words, step 405 is skipped over.

If there is in the memory a speech item (step 602: yes) it is replayed in step 604 until it ends (step 607: yes) which naturally stops the outputting (step 609). If during the outputting a new speech item is detected (step 605: yes), i.e. someone in the group has started to talk, the new speech item is recorded (i.e. stored to memory) in step 608, and the replayed speech and new speech item are outputted in step 608 as mixed together. The replaying of the speech item is stopped (step 609) if it is detected that a push-to-talk (PTT) button is pressed, or a corresponding icon is selected (step 606: yes).

In another implementation, when a new speech item is detected in step 605, replaying of the older one is stopped.

Figure 7 illustrates an exemplified functionality of a display workstation, or more precisely, a functionality of group-call-display unit.

Referring to Figure 7, when a group SDS message with the indication (ind) is received in step 701, it is checked in step 702, whether or not any alerts are determined. An alert may be determined to be common to all groups, shared by some of the groups, or to be a group-specific. Hence, alerts determined for a group may contain common, shared and group-specific alerts, two of the above-mentioned alert types, or be only one of the common, shared and group-specific alerts. Examples of alerts include "vocal alarm if text item contains xyz", "send email to address X@Y if the text item contains abc", "bring a group call dialog window of the group call to front if the text item contains xyz", "bring a group call dialog window of the group call to front and create vocal alarm if the text item contains xyz", "highlight with red letters cde in the text item", and "start GPS positioning of the user apparatus wherefrom the speech item originates if the text item contains fg or wz and show result of the positioning". As can be seen from the examples, alerts may be defined freely, and an alert may comprise one or more triggers and one or more actions. Further, some of the alerts may be predefined, but an operator of the dispatcher working station may add one or more triggers to the alert definitions. If one or more alerts are defined (step 702: yes), it is checked, whether or not any alert is detected in step 703 in the text item. If one or more alerts are detected (step 703: yes), the text item is outputted in step 704 with the alert, the outputting meaning performing one or more actions defined with the alert. Then the SDS message is stored in step 705 to the memory.

If no alerts are determined (step 702: no), or if no alert is detected in the text item (step 703: no), the text item is outputted in step 706, and stored in step 705 to the memory.

When the text items are outputted in a group call dialog window, monitoring and managing several parallel group calls, for example in an emergency center, becomes much more easier.

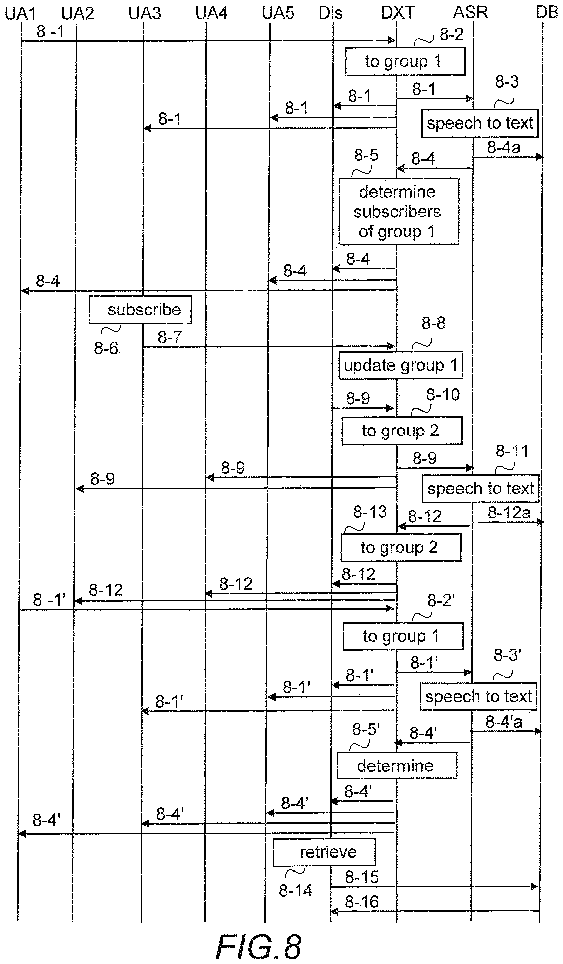

Figure 8 illustrates an exemplified information exchange in the system of Figure 1A. For example, end-to-end encryption of speech items and related functions, and correspondingly end-to-end encryption of text items and related functions, are not illustrated. In the illustrated example it is assumed that there are two groups, both being groups the ASR device is to follow. A group 1 comprises user terminals UA1, UA3, UA5, a dispatcher workstation dis, and the ASR device. A group 2 comprises user terminals UA2, UA4, the dispatcher workstation and the ASR device.

Referring to Figure 8, a speech item is sent from UA1 to the group by sending it in message 8-1 to the group server DXT. The DXT detects in point 8-2 that the speech item is for the group 1, and forwards the speech item in messages 8-1 to the group members UA3, UA5, the dispatcher workstation and the ASR. The ASR, or more precisely the speech-to-text unit, detects that a speech item is received and converts in point 8-3 the ended speech item to a text item, and associates it with metadata. Then the text item with metadata is stored (message 8-4a) to a database DB and the ASR, or more precisely the speech-to-text unit, forwards the text item to the DXT in message 8-4. The DXT detects that the message is from the ASR and to the group 1, which have in its group settings that text items that are converted from speech items are forwarded to those group members who have subscribed the service. Therefore the DXT determines in point 8-5 those group members who have subscribed the text items. Then the text item is sent in messages 8-4 to those who have subscribed. In the illustrated example, the message 8-4 is forwarded to UA1, UA5 and the dispatcher, but not to UA3. It should be appreciated than in another implementation the DXT server merely sends messages 8-4 to all group members, and those not registered to the service ignore message 8-4. In other words, depending on the radio system functionality, especially functionality of the DXT and UAs, the group text message of a specific group, or of all groups, may be always sent to all group members or only to those, who have subscribed for the ASR service (text items converted from speech items).

Then the user of UA3 detects that text items are not subscribed. For example, the user hears the speech item only partly, and wanted to check what was said but notices that no text item is displayed on UA3. The text items are subscribed in point 8-6, and UA3, or more precisely the group-speech-text unit or the enhances group-speech-text unit, sends the subscription/registration in message 8-7, and the DXT updates in point 8-8 the group settings in the group data correspondingly. It should be appreciated that in another implementation the subscription/registration is performed to another entity, such as the ASR device, for example.

The dispatcher speaks to the group 2, and the speech item is sent in message 8-9 to the DXT. The DXT detects in point 8-10 that the speech item relates to the group 2 and forwards the speech item in messages 8-9 to the group members, i.e. to UA2, UA4 and the ASR. The ASR detects in point 8-11 that a speech item is received, and converts in point 8-11 the ended speech item to a text item, and associates it with metadata. Then the text item with metadata is stored (message 8-12a) to the DB and the ASR forwards the text item to the DXT in message 8-12. The DXT detects in point 8-13 that the message is from the ASR and to the group 2, which have in its settings that text items that are converted from speech items are forwarded to all group members. Therefore the text item is sent in messages 8-12 to all group members except to the originator, i.e. the ASR. In the illustrated example, message 8-12 is forwarded to UA2, UA4 and the dispatcher. Message 8-12 may be a multicast message or a set of unicast messages.

Then another speech item is sent from UA1 to the group 1 by sending the speech item in message 8-1' to the group server DXT. The DXT detects in point 8-2' that the speech item is for the group 1, and forwards the speech item in messages 8-1' to the group members UA3, UA5, the dispatcher workstation and the ASR. The ASR detects that a speech item is received and converts in point 8-3' the ended speech item to a text item, and associates it with metadata. Then the text item with metadata is stored (message 8-4'a) to the DB and the ASR forwards the text item to the DXT in message 8-4'. The DXT detects that the message is from the ASR and to the group 1, which have in its settings that text items that are converted from speech items are forwarded to those group members who have subscribed the service. Therefore the DXT determines in point 8-5' those group members who have subscribed the text items. Then the text item is sent in messages 8-4' to those members who have subscribed the service. Since UA 3 has subscribed the messages between these two speech items, in the illustrated example, the message 8-4' is forwarded to UA1, UA3, UA5 and the dispatcher.

Then a user using the dispatcher workstation wants to retrieve some archived conversations. When the user input indicating retrieval of archived conversations, with attributes defining retrieval string (search string) group and/or time and/or some keywords, is detected in point 8-14, the dispatcher workstation, or more precisely, the group-call-display unit, makes a search query (message 8-15) to the DB. The search query may be sent directly from the dispatcher workstation to the archive DB, if a corresponding interface exists, or via the DXT and/or via the ASR. A response to the search query is received in message 8-16, and the data received in the response may be studied further. However, that is not illustrated in the example. Naturally, although not illustrated in the example, corresponding search can be performed using any of UA1, UA2, UA3, UA4 and UA5, and any apparatus having access to the database.

By storing with metadata the text items created from the speech items, it is easy to afterwards find a certain dialog in a certain group, or a specific spot in the discussion by simply using proper search query. Compared to a situation in which recordings of the voice data needs to be listened, the text format provides much faster means to obtain the data wanted.

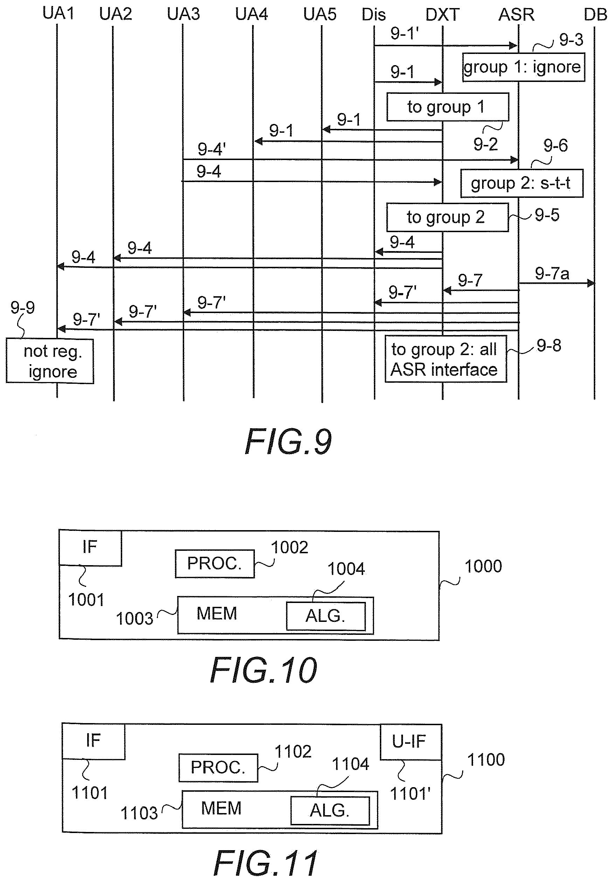

Figure 9 illustrates another exemplified information exchange in the system of Figure 1A. For example, end-to-end encryption of speech items and related functions, and correspondingly end-to-end encryption of text items and related functions, are not illustrated. In the illustrated example it is assumed that there are two groups. A group 1 comprises user terminals UA4 and UA5, naturally a dispatcher workstation dis, and the ASR device is seen as a dispatcher. A group 2 user terminals UA1, UA2 and UA3, the dispatcher workstation and the ASR device is seen as a dispatcher. In the illustrated example it is assumed that the ASR has an interface for communicating directly with some user apparatuses, and UA1, UA2 and UA3 and the dispatcher workstation have the corresponding interface to communicate directly with the ASR device. In other words, in the illustrated example they are configured to forward speech items also over the interface to the ASR device.

Referring to Figure 9, a speech item is sent from the dispatcher workstation to the group 1 by sending it in message 9-1 to the group server DXT, and over the interface in message 9-1' directly to the ASR. The DXT detects in point 9-2 that the speech item is for the group 1, and forwards the speech item in messages 9-1 to the group members UA4 and UA5. However, the ASR detects in point 9-3 that group 1 is not one of the groups to follow, and therefore ignores in step 9-2 the speech item in message 9-1'.

Then a speech item belonging to group 2 is sent from UA3, in message 9-4 to the DXT and over the interface in message 9-4' directly to the ASR. The DXT detects in point 9-5 that the speech item is for the group 5, and forwards the speech item in messages 9-4 to the group members UA1 and UA2 and to the DXT.

The ASR, or more precisely the speech-to-text unit, detects in point 9-6 that group 2 is one of the groups to be followed, and converts in point 9-6 the ended speech item received in message 9-4' to a text item, and associates the text item with metadata. Then the text item with metadata is stored (message 9-7a) to a database DB and the ASR, or more precisely the speech-to-text unit, forwards the text item to the DXT in message 9-7 and over the interface in messages 9-7' as a group message to the user apparatus comprising the corresponding interface. In the illustrated example they are UA1, UA2, UA3 and the dispatcher.

In the illustrated example, the group information in the DXT comprises information on user apparatuses supporting the interface. Therefore, when the DXT receives message 9-7, it detects in point 9-8 that it is to the group 2, and that all participating group members support the interface (ASR interface). Therefore the DXT does not forward message 9-7 to group members. However, in another implementation the DXT could forward message 9-7, and then the receiving user apparatuses would ignore the one of messages 9-7 and 9-7' that is received later. Further, in the illustrated example UA1 is not registered to the service, at least not for group 2. Therefore, when detecting that message comprise a text item converted from a speech item in group 2 and such service is not subscribed (registered to) in point 9-9, UA1 ignores in point 9-9 message 9-7'.

Implementing the information exchange illustrated in Figures 8 and 9 to the system of Figure 1B, is a straightforward solution: it requires additional information exchange between the ASR depicted in the Figures 8 and 9, and the external ASR server performing the actual conversions. More precisely, for each speech item to be converted to a text item following information exchange is performed: a speech item is sent from the ASR depicted to the external ASR server, and a text item is sent from the external ASR server to the ASR server depicted.

As is evident from the above examples, if a speech item is missed, its information is easily available in text format, which may also replayed vocally.

The steps, points, related functions and information exchanges described above in Figures 2 to 9 are in no absolute chronological order, and some of them may be performed simultaneously or in an order differing from the given one. Other functions can also be executed between them or within them, and other information may be sent. For example, a user apparatus may be configured to implement also the functionality disclosed above with the dispatcher workstation. Another example includes also storing the speech items, preferably with the same metadata. Some of the steps or points or part of the steps or points or one or more pieces of information can also be left out or replaced by a corresponding step, point or part of the step, point or one or more pieces of information.

The techniques and methods described herein may be implemented by various means so that an apparatus (computing device) configured to provide or support speech item to text item conversion service based on at least partly on what is disclosed above with any of Figures 1A to 9, including implementing one or more functions/operations described above with an embodiment/example, for example by means of any of Figures 2 to 9, comprises not only prior art means, but also means for implementing the one or more functions/operations of a corresponding functionality described with an embodiment, for example by means of any of Figures 2 to 9, and it or they may comprise separate means for each separate function/operation, or means may be configured to perform two or more functions/operations. For example, one or more of the means and/or the speech-to-text unit and/or the group-speech-text unit and/or the enhanced group-speech-text unit and/or the instant-replay unit and/or the limited instant-replay unit and/or the group-call-display unit described above may be implemented in hardware (one or more devices), firmware (one or more devices), software (one or more modules), or combinations thereof. For a hardware implementation, the apparatus(es) of embodiments/examples may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, logic gates, other electronic units designed to perform the functions described herein by means of Figures 2 to 9, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, the memory unit can be communicatively coupled to the processor via various means, as is known in the art. Additionally, the components of the computing device (apparatus) described herein may be rearranged and/or complemented by additional components in order to facilitate the achievements of the various aspects, etc., described with regard thereto, and they are not limited to the precise configurations set forth in the given figures, as will be appreciated by one skilled in the art.

Figure 10 provides an apparatus according to some embodiments of the invention. Figure 10 illustrates an apparatus configured to carry out the functions described above in connection with the ASR server. Each apparatus 1000 may comprise one or more processing circuitry, such as at least one processor 1002, and at least one memory 1003, including one or more algorithms 1004, such as a computer program code (software) wherein the at least one memory and the computer program code (software) are configured, with the at least one processor, to cause the apparatus to carry out any one of the exemplified functionalities of the ASR server. The apparatus may further comprise different interfaces 1001, such as one or more interfaces to communicate directly with user apparatuses, one or more interfaces to communicate with the database, one or more communication interfaces to communicate with a group communication server, such as the DXT in the examples, and/or one more communication interfaces to communicate to the external ASR server.

Figure 11 provides an apparatus according to some embodiments of the invention. Figure 11 illustrates an apparatus configured to carry out the functions described above in connection with one of the user apparatus (including dispatcher workstations). Each apparatus 1100 may comprise one or more processing circuitry, such as at least one processor 1102, and at least one memory 1103, including one or more algorithms 1104, such as a computer program code (software) wherein the at least one memory and the computer program code (software) are configured, with the at least one processor, to cause the apparatus to carry out any one of the exemplified functionalities of the user apparatus. The apparatus may further comprise different interfaces 1101, such as one or more interfaces to communicate with the group communication server, such as the DXT in the examples, one or more interfaces to communicate directly with ASR server, and/or one or more interfaces to communicate with the database, and one or more user interfaces 1101' to user interaction.

Referring to Figures 10 and 11, at least one of the processing circuitries in the apparatus 1000, 1100 is configured to provide the speech-to-text unit and/or the group-speech-text unit and/or the enhanced group-speech-text unit and/or the instant-replay unit and/or the limited instant-replay unit and/or the group-call-display unit, or any corresponding sub-unit, and to carry out functionalities, described above by means of any of Figures 2 to 9, by one or more circuitries.

The memory 1004 or part of it may be implemented using any suitable data storage technology, such as semiconductor based memory devices, flash memory, magnetic memory devices and systems, optical memory devices and systems, fixed memory and removable memory.

The one or more interfaces 1001, 1101 may comprise communication interfaces comprising hardware and/or software for realizing communication connectivity according to one or more communication protocols.

The one or more user interfaces 1101' may be any kind of a user interface, for example a screen, microphone and one or more loudspeakers for interaction with the user.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a computing device.

In an embodiment, the at least one processor, the memory, and the computer program code form processing means or comprises one or more computer program code portions for carrying out one or more operations according to any one of the embodiments of Figures 2 to 9, or operations thereof.

Embodiments as described may also be carried out in the form of a computer process defined by a computer program or portions thereof. Embodiments of the methods described in connection with Figures 2 to 9 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a per-son of ordinary skill in the art.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

It will be obvious to a person skilled in the art that, as technology advances, the inventive concept can be implemented in various ways. The invention and its embodiments are not limited to the examples described above but may vary within the scope of the claims.

## Claims

1. A computer implemented method comprising:
detecting (206) in a network node that a speech item targeted to a group starts;
recording (204), by the network node, the speech item, originating from a speaking member of the group, while the speech item is delivered to non-speaking members of the group;
causing, in response to the speech item ending (205), by the network node, conversion (206) of the speech item to a corresponding text item;
causing, by the network node, delivery (207) of the text item to the non-speaking members of the group and to the speaking member of the group; and
causing, by the network node, storing (208) to a database the text item with metadata, which comprises at least one of metadata items comprising and/or being based on time information, information on the group, and information on the one who spoke.

2. A computer implemented method as claimed in claim 1, further comprising delivering (207) the text item in a group short data service message with an indication that the content is converted speech item.

3. A computer implemented method as claimed in claim 1 or 2, further comprising:
maintaining (8-5, 8-5') information on group members who have subscribed to receive text items that are converted speech items in the group; and
delivering (8-4, 8-4') text items to the group members who have subscribed to receive the text items.

4. A computer implemented method comprising:
receiving in a user apparatus a group speech item;
forwarding (8-1), if the group speech item is received as a user input, the group speech item to other group members, otherwise outputting the group speech item to a user of the user apparatus;
receiving (8-4) in the user apparatus a text item that is the group speech item converted into text; and
displaying (307) the text item on a user interface of the user apparatus.

5. A computer implemented method as claimed in claim 4, further comprising:
checking (305), before displaying the text item, whether or not one or more actions are to be performed based on the content of the text item and one or more settings in the user apparatus; and
if one or more actions are to be performed, performing (306) them; and
displaying the text item.

6. A computer implemented method as claimed in claim 4 or 5, further comprising:
monitoring plurality of groups;
displaying text items in group-specific windows, wherein a displayed window may comprise plurality of text items.

7. A computer implemented method as claimed in claim 4, 5 or 6, further comprising:
checking (303), in response to receiving the text item, whether or not the text item is to be filtered away according to one or more filter settings in the user apparatus; and
displaying (307) the text item if it is not to be filtered away.

8. A computer implemented method as claimed in claim 4, 5, 6 or 7, further comprising:
detecting (401), by the user apparatus, a user input comprising a gesture triggering an instant replay of the group speech item; and
outputting (406), in response to the user input, by the user apparatus, the latest received text item of an active group vocally.

9. A computer implemented method as claimed in claim 8, further comprising:
determining (404) the age of the latest received text item of the active group;
outputting the latest received text item if the age is not more than a preset limit.

10. A network node (130, 130') comprising means for carrying out a method according to any one of claims 1 to 4.

11. A user apparatus (110, 110', 111, 111', 120) comprising means for carrying out a method according to any of claims 5 to 9.

12. A system (100, 100') comprising:
at least one network node(130, 130', 140) as claimed in claim 10; and
a plurality of user apparatuses (110, 110', 111, 111', 120) as claimed in claim 11.

13. A system (100') as claimed in claim 12, the system comprising
a first network (100') that comprises the at least one network node (130') and the plurality of user apparatuses (110', 111', 120); and
an automatic speech-to-text conversion server (146) outside the first network and configured to convert speech items to text items; wherein
the at least one network node (130') is configured to cause conversion of a speech item to a corresponding text item by sending the speech item to the automatic speech-to-text conversion server (146) and receiving from the automatic speech-to-text conversion server the corresponding text item.

14. A system (100, 100') as claimed in claim 12 or 13, wherein
the at least one network node (130, 130') comprises an interface for direct communication with user apparatuses (110, 110', 111, 111', 120) for receiving speech items and for sending text items; and
one or more of the plurality of user apparatuses (110, 110', 111, 111', 120) comprises an interface for direct communication with the at least one network node (130, 130') for sending speech items and for receiving text items.

15. A computer program product comprising computer program code configured to perform a method as claimed in any one of claims 1 to 9 when executed on an apparatus.
